Europäisches Patentamt

European Patent Office

Office européen des brevets

(11) Publication number: **0 263 681 B1**

## EUROPEAN PATENT SPECIFICATION

(45) Date of publication of patent specification: **05.01.94** (51) Int. Cl.⁵: **G11B 5/265**, G11B 5/245, G11B 5/02

(21) Application number: **87308856.1**

(22) Date of filing: **06.10.87**

Divisional application 93201769.2 filed on 06/10/87.

(54) **Magnetic transducer head structure.**

(30) Priority: **06.10.86 US 915734**
**10.04.87 US 36915**

(43) Date of publication of application:
**13.04.88 Bulletin 88/15**

(45) Publication of the grant of the patent:
**05.01.94 Bulletin 94/01**

(84) Designated Contracting States:
**AT BE CH DE ES FR GB IT LI LU NL SE**

(56) References cited:
**EP-A- 0 174 714**
**US-A- 2 928 079**
**US-A- 3 171 107**
**US-A- 3 353 168**

(73) Proprietor: **Archive Corporation**
**1650 Sunflower Avenue**
**Costa Mesa California 92626(US)**

(72) Inventor: **Bolt, Michael Loren**
**3751 Miller Road**
**Ann Arbor Michigan 48103(US)**
Inventor: **Sokolik, Edmund Louis**
**32445 Cambridge**
**Warren Michigan 48093(US)**

(74) Representative: **Robinson, Anthony John**
**Metcalf et al**
**Kilburn & Strode**
**30 John Street**
**London, WC1N 2DD (GB)**

EP 0 263 681 B1

**Description**

This invention relates generally to the field of magnetic recording, and more particularly to transducer structures used for magnetic recording and reproducing ("read/write") operations. Still more particularly, the invention relates to magnetic transducer core structures which are particularly useful in digital data-storage devices, especially (but not exclusively) tape recorder devices ("tape drives") of the type used in such applications.

Most data storage and retrieval is done by use of magnetic recording apparatus, mainly disc drives and tape drives (the term "drive" having come to be accepted as the basic industry designator for recorder/reproducer devices). In the case of disc drives, there are both "hard" disc and "floppy" disc-type media, the "hard" disc being a rigid platter having a magnetizable surface upon which magnetic flux transitions are recorded by means of a transducer head which aerodynamically "flies" with respect to the surface of the disc, being spaced therefrom by a thin film of air. "Floppy" disc drives utilize magnetically recordable media which although disc-like in shape is much more in the nature of magnetic tape, being highly flexible and typically comprising a sheet of polymeric material carrying a surface coating of magnetizable metal oxide. In floppy disc drives, as in tape drives, recording is accomplished by maintaining direct contact between the moving media and the recording head, usually by projecting the tip of the head (at the magnetic "gap") into the plane of the flexible media as it moves past the head.

Tape drives typically, or at least frequently, feature a bi-directional recording and reproducing operation in which the tape is transported along its length from one end to the other during a first read or write operation and then transported back in the opposite direction for the next such operation, without rewinding the tape between the two successive recording operations as would usually be done in tape recording. This bi-directional operation is not characteristic in disc drives (whether "floppy" or "hard" disc media is involved), in which the disc-form media is continuously rotated in the same direction and all recording or reproduction on the media is done unidirectionally.

This rather fundamental difference in operational modes creates a corresponding fundamental difference in the nature of the transducers or heads which may be utilized. In the case of bi-directional reading and writing, a multi-gap head is used, but in the case of unidirectional recording only a single-gap head is necessary, which is much less expensive than a multi-gap head but has the disadvantage of only being able to read and write at different times; i.e., it cannot write and simultaneously read data, as is frequently desirable and is often provided for in tape drives.

Furthermore, in order to maximize the likelihood that the read gap will be properly positioned directly over the written track on the media, two essentially opposite approaches have come to be recognised in the art with respect to the multi-gap heads used in tape drives. The first of these involves use of a write gap which is substantially wider than the read gap, such that if the read gap is nominally positioned anywhere near the centre of a written track, the head is likely to be fully in registration with the track, i.e., recorded transitions extending across the entire height, i.e. length, of a the gap. The second such approach involves use of a head having a separate erase gap disposed ahead of the write gap, so that the media is erased cleanly before each writing operation takes place; thus, the writing is always accomplished on media having no residual signals. In this arrangement, a read gap is used which is considerably wider than the written track, so that the entire width of the written track is always likely to be completely straddled by the read gap. Since the separate erase gap eliminates all residual or extraneous signals recorded contiguous to the narrower written track, interference, cross-talk and the like will not be present in the read data stream.

Since the approaches just described can only be accomplished with multi-gap heads, they are not utilized in floppy disc drives, where only single-gap read/write heads are used. In order to provide a system somewhat analogous to the second arrangement described above, floppy disc drives frequently utilize a "tunnel erase" concept, in which separate erase gaps are provided on both sides of, and to the rear of, the single read/write gap. The function of the two such erase gaps is to "trim" the marginal edges of the written data track by erasing along both sides thereof, thus producing a resultant narrowed track of written data, the sides of which have no residual or extraneous recorded transitions. In this arrangement, the head structure is somewhat complex since it is necessary to space the erase gaps rearwardly of the read/write gap in order to eliminate or minimize both mechanical and magnetic interference problems, and of course there is the added requirement and expense of providing, and assembling, two separate erase gaps.

The tunnel-erase concept just described is not advantageous in bi-directional recording operations, since bi-directional use of that type of head would inherently necessitate the addition of another pair of erase gaps, spaced on the opposite side of the single read/write gap from the location of the first such set of erase gaps, in order to accommodate both of the possible mutually-opposite recording directions. The realities of manufacturing such a head do not favour its potential use, since the required accurate alignment of the various erase gaps with respect to themselves and with respect to the single read/write gap results in a different manufacturing process which inevitably adds substantial expense. Of course, there is also additional expense involved in the requirement of the second pair of erase gaps, in and of themselves.

In an effort to provide a solution for the difficulties and problems discussed above, it has heretofore been proposed to use a different form of core structure for such transducer heads, which in effect provides operational characteristics functionally representative of those typically found in multi-gap heads, while nonetheless having in fact only a single read/write gap.

More particularly, it has been proposed in the past, to use a transducer head whose magnetic core structure has a full-width write core disposed on one side of the gap and a partial-width read core on the opposite side of the gap. In this structure, special additional magnetic closure or return pieces are disposed on opposite sides of the comparatively narrow read core at the gap, to in effect fill the space created by narrowing the read core. These additional components serve as part of the write core structure during write procedures but are not intended to contribute to the read core output signal appearing on a sense coil accessing only the read core. For examples of such transducer core structures, reference is made to Japanese Patent Publications Nos 50-111817 (Pat. No. 5235618) and 58-171710 (Patent Abstracts Vol. 8, No. IO, P.248), as well as US-A-4085429 and EP-A-174714. The precharacterising portion of Claim 1 is based on this last document.

US-A-4085429 discusses the overriding importance of obtaining the most favourable signal-to-noise ratios possible in using such special-purpose transducers, and of isolating the read channel from the write channel therein, and this prior patent is predicated upon the use of certain allegedly critical limitations for the thickness, with respect to the magnetic gap, of isolation layers proposed for use between the narrowed read core and the special additional write core closures disposed on opposite sides of the read core.

Notwithstanding the factors just noted, the prior efforts of others in the field have until now failed to appreciate and take into consideration certain other highly significant factors involved in the design considerations for the special-purpose transducer-head core structure involved, and the present invention is based upon, and provides, recognition and disclosure of these important factors. Thus, the present invention provides new and valuable structural features and arrangements for such a core structure, involving improvements which are of such importance where high-density recording is involved as to ultimately make the difference between successful and unsuccessful operation, bearing in mind the underlying requirement that in actual operation such a device must be substantially free from spurious error and consistently reliable in performance.

According to one aspect of the present invention, a magnetic core structure for a transducer head particularly adapted for use in digital storage devices comprises: magnetic core elements formed from magnetic material and defining a magnetic circuit, said circuit having at least one gap where magnetic flux in such circuit may access magnetically-recordable data storage media; means defining a first magnetic pole structure for said circuit at one side of said gap, and means defining a second magnetic pole structure for said circuit at the other side of said gap, generally opposite said first pole structure; at least one of said magnetic pole structures having a laminar structure comprising at least one medial strata and at least one flanking strata disposed adjacent to and overlying at least portions of said medial strata to thereby define an included area of overlap at such portions, said medial strata having a thickness at said gap which is less than that of the other pole structure disposed across said gap; non-magnetic isolation means disposed between said medial strata and said flanking strata at said one pole structure, for isolating at least said portions of said medial strata from the adjacent portions of the flanking strata; said flanking strata comprising magnetic material and serving to magnetically shunt portions of said medial strata along said magnetic circuit, said flanking strata extending alongside and into magnetic communication with said medial strata at a point spaced from said one pole structure to provide a parallel magnetic return; said medial strata having an intermediate portion shunted by and separated from said flanking strata, said intermediate portion defining a core-accessing location along said magnetic path where an electromagnetic coil may be applied to the core; said medial strata extending into magnetic communication with said other magnetic pole structure at a point beyond said intermediate portion; and said included area of overlap between said medial strata and said flanking strata being limited in size to an amount which limits the transfer of magnetic flux from the flanking strata to the medial strata through the non-magnetic isolation means at said area to less than about ten percent of the total magnetic flux in said magnetic circuit.

According to another aspect of the present invention, a method of reading and writing magnetic flux transitions on magnetically-recordable media by using a single-gap transducer head in a manner producing results analogous to those achieved by a multi-gap head, comprises the steps: transporting the recording media past a single-gap transducer head in a recording pass and recording flux transitions on said media during said pass by using a first portion of the transducer magnetic core structure which defines the two opposite sides of said single gap, said first portion constituting a predetermined part of the overall length of said gap; transporting the recording media past said transducer head in a reproducing pass and, during said reproducing pass, reproducing the flux transitions previously recorded on said media by using a second portion of said magnetic core structure; said second portion of said core structure constituting magnetic structure forming a predetermined different portion of the overall length of said gap, whereby a different proportion of the same transducing gap is used during read operations than is used during write operations; and isolating said second portion of said magnetic core structure from other portions thereof during said reproducing pass by disposing non-magnetic means therebetween and restricting the area of overlap existing between said second portions and said other portions to an extent which limits said flux transfer to a value not substantially exceeding ten percent of the total magnetic flux flowing in said magnetic core structure.

Accordingly, the present invention provides structural improvements and design criteria for "wide-write, narrow-read" magnetic transducer core structures, which improvements make high-density recording operation possible with attendant low error rates. Broadly speaking, the invention provides important structural and size relationships in the elements comprising the magnetic core; more particularly, the invention provides certain critical size relationships in the area of overlap between the read core and the special write core closures which, when carried through in the incorporation of isolation components (laminar elements, at times referred to as "strata"), provide the consummately desirable operational results just noted.

The invention may be carried into practice in various ways but three transducer head core structures embodying the invention will now be described by way of example with reference to the accompanying drawings, in which:

Fig. 1 is a sectionalized overhead plan view of the first transducer head core structure;

Fig. 2 is an enlarged, front-elevational view of the structure shown in Fig. 1 taken along the plane II-II of Fig. 1;

Fig. 3 is a schematic representation showing the equivalent magnetic circuit for the core structures shown in the other figures;

Fig. 4 is a sectionalized overhead plan view of the second transducer head structure;

Fig. 5 is an enlarged, fragmentary front elevational view of the structure shown in Fig. 4;

Fig. 6 is a further enlarged, fragmentary, front perspective view of the core structure shown in Fig. 4; and

Fig. 7 is a fragmentary, perspective view similar to Fig. 6 but showing the third core structure as also illustrated in Fig. 5.

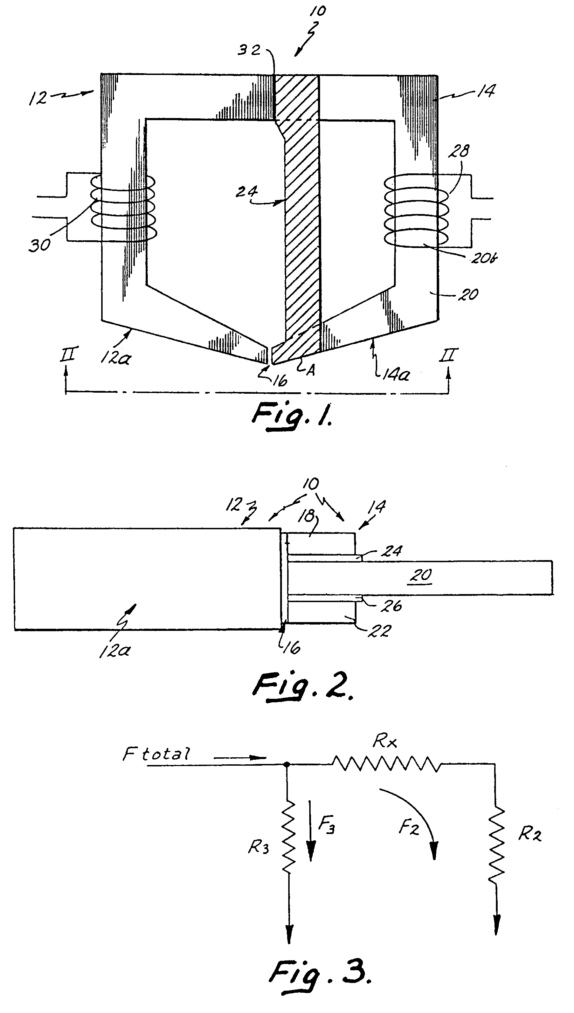

Referring now in more detail to the drawings, Figs. 1 and 2 show the overall nature of a transducer head core structure 10 in accordance herewith. As illustrated in these Figures, the core structure 10 includes differently-structured parts (essentially halves) 12 and 14. Considering the half or portion 12 of the core structure as being the "write" portion, it will be seen that this half of the core, shown at the left of the transducing gap 16, constitutes a single pole member whose height is the full height of the gap.

The portion 14 of the core structure 10, appearing at the right side of the transducing gap 16, is not a single monolithic structure like the portion 12, but is instead composite in form including (in this particular embodiment) three different component parts disposed in stratified or laminar form, designated 18, 20 and 22 respectively. Of these, the two outermost (side) members (sometimes referred to herein as "flanking strata") 18 and 22 comprise closures (returns) for the write core, whereas the central or medial strata 20 comprises the read core.

As discussed more fully below, it is extremely important for each of the three core elements, or strata, 18, 20 and 22 to be separated, i.e. magnetically isolated, from one another. For this reason, non-magnetic isolation members 24 and 26 are disposed between and preferably extend at least slightly beyond the boundaries of the write closures 18 and 22, as illustrated in Fig. 2, the read core 20 extending substantially beyond the isolation layers.

With reference to Fig. 1, it will be seen that the core structure 10 may be generally C-shaped in its overall configuration forming the recording gap 16 at the opening between two converging face portions 12a and 14a which basically define what is commonly referred to as the "cutback angle". Bearing in mind the relative height of the different strata shown in Fig. 2, it will be seen from Fig. 1 that the main write core 12 extends rearwardly from face portion 12a, has an electrical excitation or drive winding (a "write coil") 30 wound about an intermediate portion of it, and extends back toward and into contact (or other magnetic communication) with the other half of the overall core structure at a boundary or junction 32. At this rearward location, the three core elements 18, 20 and 22 located on the opposite side of junction 22 have essentially the same height relationship as they do at the transducing gap 16, and thus together correspond to the full height of the write core 12.

The upper and lower strata 18 and 22, i.e., the write closures, extend rearwardly from the transducing gap 16 in a much more direct manner than is true of the inner or medial read core strata 20, which has a configuration in plan which is essentially a mirror-image to that of the write core portion 12 described above (Fig. 1). Also, the read core medial strata 20 has an electromagnetic coil 28 wound about an intermediate portion 20b, which in accordance with the embodiment under discussion constitutes a read sense coil.

With regard to particular structural materials, the read and write cores 12 and 20 and the write closures 18 and 22 may in general be of any conventional magnetic material customarily used in transducer cores, i.e., "mu metal", ferrite, etc. The various components ("strata") constituting the different core elements may each comprise a "stack" of thin sheet-like laminae, as is often done to reduce eddy current effects, but this is not really essential in transducer cores generally, particularly where (as here) the intended application is to write and read relatively narrow and closely-spaced tracks of magnetic transitions. As will be understood, the isolation layers or elements 24 and 26 are to be of non-magnetic material, e.g. copper or brass, etc. Where the intended media is in the form of magnetic tape, the overall height of the head is preferably many times greater than the mere height of the magnetic core structure itself, and generally equals or exceeds the total width of the tape since the latter must slide lengthwise across the convex (and often curved) front face of the head during transducing operations and the tape should be supported by the head across its entire width. The opposite is generally true in floppy disc transducing procedures, wherein the pole pieces defining the gap typically form a rounded, bluntly conical projection which deforms the recording media into a complementary dimple as the media moves over the gap during recording. As already indicated above, the core structure of the present invention may be embodied in a head of that nature also, by merely using appropriate shape relationships and incorporating the basic structural attributes and concepts set forth herein.

As will be understood, since the preferred embodiment in accordance herewith refers to a transducer head for use with tape media, the overall height of the transducer head should be much higher than the mere height of a single-track core structure, such as is shown in Fig. 2, the general physical structure of the head (apart from the core) being structured according to known head-building techniques, in accordance with which a mounting block of non-magnetic material (e.g., brass) of the desired physical size for the overall head is used to mount the magnetic core components. Usually, such a mounting block takes the form of two complementary halves, which are joined together around the outside of the core structure, interstitial spaces being filled by an appropriate non-magnetic potting compound, such as epoxy, which may also be used as an exterior coating or shaping agent.

A transducer head structured generally in accordance with the foregoing provides the anomalous result of non-symmetric write/read width characteristics in a single-gap core and head. In the particular format generally referred to above, the write core (pole structure) 12 is configured, by its size and shape at the magnetic gap and the characteristics of the write coil winding 30, to write a track of magnetic transitions which are essentially as wide as the full length of the gap 16, i.e., the full width of core portion 12. On the other hand, the much narrower read core ("medial strata") 20 is configured, by its own size and shape, and by the characteristics of the read coil 28 wound upon its accessible intermediate portion 20b, to read a track width much narrower than the write core. Consequently, the overall head structure in the arrangement noted constitutes a head of single-gap configuration which writes a wide track but reads a narrow one.

Somewhat more particularly, it will be seen from the above that energization of the write coil 30 with electrical signals which it is desired to record will create corresponding magnetic flux patterns within the core structure 10, travelling around the paths so defined and across the transducing gap 16, at which position the width of the flux at the gap is actually a function of the height or width of the write core 12 and the overall height or width of all of the various strata (18, 20 and 22) constituting the opposite core half 14, i.e., essentially the same width as the write core 12. As a result, a recorded track of the same width is written on the media moving across the gap.

Accordingly, in a write mode, the magnetic flux which moves across the gap from core 12 to core 14 is actually returned across the rear portion of the core (i.e., across the boundary 32) by all three of the strata 18, 20 and 22. In a read mode, however, the magnetic circuit performance is different due to the relative configuration of the read core 20 and the position of the read coil 28, which is wound upon only the medially-disposed read core element 20 and not on either of the outer strata 18 and 22 which flank the read core; consequently, member 18 and 22 function only as write closures. Thus, with the read core disposed in coaxial alignment with a written track on the media, the read core pole piece will be aligned over only the centre portion of the written track on the media, and it will thus access considerably less than the full width of the magnetic transitions on the media. Accordingly, the magnetic flux flowing from the read core strata 20 to the rear boundary or junction 32 will be substantially less than the total available magnetic flux within the core itself, the write closures (i.e., the "peripheral" or "flanking" strata 18 and 22) serving in effect to shunt away from the read core a selected portion of the total magnetic flux which is not desired to be represented in the output (i.e., not desired to be "read"). Accordingly, a wide-write, narrow-read capability is provided, even though the head has but a single magnetic gap.

As indicated above, the selectively separate performance of the read core structure in relation to the write core structure of the disclosed apparatus is of primary importance in satisfying the desired objective. In large part, this consideration resolves itself down to the effective isolation of such two different core portions from one another, particularly during "read"-type transducing operation, at which time it is typical to encounter magnetic transitions on the recording media in proximity with the write closures ("flanking strata") 18 and 22 which are not desired to be reproduced in any manner. For example, such transitions may simply comprise "noise" of undetermined origin, or unerased previously-recorded data, "over-write", etc. Of course, since the read sense winding 28 is disposed about only the read core ("medial strata") 20, and not about the write closures 18 and 22, the effect of flux transitions encountered at the gap 16 by write closures 18 and 22 will not induce a corresponding sense voltage in the read winding 28; nonetheless, it will be evident that "cross talk" may result in a number of ways, which generally may be considered as "leakage" between the corresponding read and write portions of the core structure, mutual inductance, etc.

In point of fact, effective isolation between the write closures 18 and 22 and the read core 20, respectively, is essential in order to limit the effects of such "noise" to the greatest extent possible. This is particularly true where high-density digital recording is to be accomplished and, as is well known, there appears to be a constant and continuing desire for ever-greater recording densities in order to maximize data storage in relation to the physical size of the media. Whereas the isolation of these read and write core components has been largely overlooked by others heretofore, however, the aforementioned US-A-4085429 provides for the use of isolating (non-magnetic) layers at the locations which have been identified; however, the entire thrust of this prior patent is that in order to be effective the thickness of such isolation layers is critical, and this prior patent states a requirement for a very specific range of such thickness, given in terms of the recording gap width.

The present invention is based upon different and alternative concepts from those just noted, which have heretofore gone unrecognised.

More particularly, with reference to Fig. 3, the simplified circuit shown in this figure represents the magnetic flux present in the magnetic circuit provided by the core structure 10. In this schematic, the label "F total" designates total flux flow in the magnetic circuit, and is comprised of the two branches F2 and F3, which represent the flux flowing through the read core and through the write closure, respectively. In this figure, the magnetic reluctance of the corresponding core parts is represented as resistance elements, element R3 being the combined reluctance of the two spaced write closures 18 and 22, Rx being in effect the composite reluctance of the two isolation layers 24 and 26, and R2 designating the magnetic reluctance of the read closure 20 alone; thus, the effective reluctance of the read path is (Rx + R2).

From the above, it will be seen that the degree of isolation in the disclosed multi-component core structure is a function of the magnetic reluctance of the write closures (R3) in relation to that attributable to the read structure (Rx + R2). Thus,

$$\frac{F2}{Ftotal} = \frac{R3}{R2+R3+Rx}$$

Of course,

$$Rx = \frac{1}{\mu_o} \times \frac{1}{\mu_r} \times \frac{t}{A}$$

where
$\mu_o$ is the permeability of free air,
$\mu_r$ is the permeability of the non-magnetic material used for the isolation layers,
t = the thickness of the isolation layers,
and
A = the common area included between the write closures 18 and 22 and the read closure 20, i.e., the corresponding overlap between these elements.

In accordance with the above, it may be seen that it is very important to make Rx large with respect to $R_3$. While this may be accomplished by making the thickness of isolation layers large in relation to their effective area A this approach causes undesirable results because it produces a correspondingly wide-unrecorded "stripe" on the media during write operations which typically comprises unerased data from previous operations. Consequently, in accordance with the present invention the desirable result of making Rx large with respect to Re is achieved by making the common area A (see Fig. 1) small in relation to the thickness of the isolation layers 24 and 26, in particular of an order of magnitude sufficient to make the aforementioned flux ratio F2/Ftotal not more than about 5%, and in no event more than 10%. That is, the ultimate goal should be to maintain the common area A to a value permitting no more than about 10% leakage or cross talk, and preferably no more than about 5%, between the magnetic flux flowing in the write closures 18 and 22 and the read closure 20 disposed therebetween. As indicated above, it is in fact essential to maintain such a relationship in order to achieve reliable and consistent substantially error-free high-density digital recording.

To further and more explicity illustrate the foregoing, the width of a typical desired read core 20 may be on the order of half the total width of the write core 12 (for example .127 mm (5 mils) and .254 mm (10 mils), respectively) and if the thickness (t) of the isolation members 24 and 26 is approximately .0127 mm (0.5 mil) each (as in fact deemed appropriate in such a situation) the combined width of the two write closure members 18 and 22 will be .102 mm (4 mils). The amount of undesired noise introduced by flux transitions "read" by the write closures 18 and 22 during read operation is modified by these size ratios: thus, where the dimensions are as stated above, and where the maximum allowable flux leakage margin is selected to be not more than ten percent,

$$\frac{F2}{Ftotal} \quad = \quad \text{less than } .10 \text{ x } \frac{5}{2}$$

or, stated in terms of magnetic reluctance,

$$\frac{F2}{Ftotal} \quad = \quad \frac{R3}{R2+R3+Rx} \quad = \text{less than } .25$$

thus,

$$\frac{R3}{.25} - R3 - R2 = \text{less than } Rx$$

and 3R3 - R2 = less than Rx = $\frac{t}{k}$ (1/A)
(where k = $\mu_o$ x $\mu_r$)

therefore, it is desired that

$$A = \text{less than} \quad \frac{1}{3R3 - R2} \text{ x } \frac{t}{k}$$

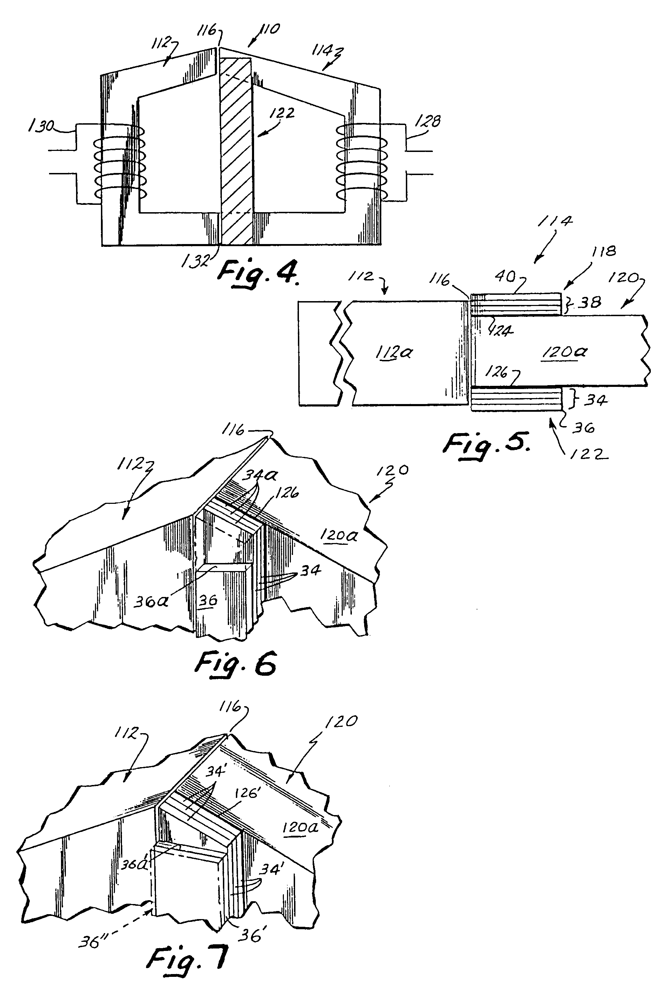

In a specific working example of the above, where
R3 = 6.9 x 10$^6$
R2 = 4.4 x 10$^6$
$\mu_o$ = 4$\pi$ x 10$^7$
$\mu_r$ = 1
A = less than 0.6 mm$^2$ (961 mils$^2$)
Two alternative embodiments of the inventive concept described hereinabove are disclosed in Figs. 4-7.

In light of the structural similarities between the various different embodiments, like components are identified with like numerals bearing the prefix "1". Hence, for example, the core structure of Fig. 4, which is comparable to the core structure 10 of Fig. 1, is designated as 110, the core "halves" as 112 and 114, and so on. As with the embodiment illustrated in Figs. 1-3, the three main elements 118, 120 and 122 located on the opposite side of junction 132 from write core 112 have essentially the same height relationship as they do near the transducing gap 116, although the actual height relationship of the write closures 118 and 122 at the gap 116 preferably varies in accordance herewith, as described more fully below. Except for structural differences between closure member 18, 22 (Fig. 2) and closure members 118, 120 (Figs. 5-7), the core structures 10 and 110 are substantially equivalent. With reference to Figs. 5, 6 and 7, it will be noted that the write closures designated generally by the numerals 118 and 122 actually include several distinct and different component pieces. Closure 122, which is identical to closure 118, includes a number (here shown as three) of substantially identical, superimposed closure strips or elements 34 which are disposed immediately atop the isolation layer 126, together with one or more additional closure strips 36, which are positioned somewhat differently from closure strips 34.

As illustrated in Figs. 6 and 7, closure strips 34 have angularly-sloping end portions which are complementary to and symmetrical with the adjacent sloping face of the read core 120. In the embodiment shown in Fig. 6, the closure strips 34 do not completely fill the space along gap 116 provided by the reduced width of the read core 120. This remaining spacing is filled by the additional write closure strip 36, which is disposed immediately atop the outermost closure strip 34; however, it will be noted that the end extremity 36a of write closure 36 is recessed from the angled faces of both read core 120 and closure strips 34, which approach and define the gap 116. Furthermore, end face 36a of closure strip 36 is not angled like the faces 34a of closure 34. Accordingly, the relative configuration of closure strips 34 and 36 leaves a generally triangular (actually, preferably trapezoidal) open area 42, which is outlined in phantom in Fig. 6. This area is filled with non-magnetic material, which may in the simplest case simply be air, but is preferably a diamagnetic substance such as copper, etc.

Closure 118 is similarly constructed of inner closure strips 38 and one or more additional shorter outer strips 40.

A variation on the structure shown in Fig. 6 and just described, constituting a preferred alternative embodiment, is illustrated in Fig. 7. In this configuration, it will be noted that a series of write closures 34′ are utilized alongside the narrowed read core 120, in much the same manner as is true in the embodiment of Fig. 6, but that the closures 34′ of Fig. 7 completely fill the space created by the narrowed read core. Once again, at least one additional outer closure strip 36′ is utilized, (although at least one more, shown as 36″ in phantom may also be used. Once again, the end face 36a′ is preferably blunt or right-angled, rather than angularly sloping like the adjacent faces 34a′ presented by the closure strips 34; however, in this case it is perhaps not essential (even though desirable), to fill the trapezoidal area between end face 36a′ and the adjacent end faces 34a′ with non-magnetic material.

As will be appreciated, the write closures 34′ and 36′ are all of magnetic material and are stacked adjacent one another in direct contact, having no isolation material between them comparable to the layer 126 which is provided between the write closures 122 and the read core 120, as described above. Consequently, the write closures 34′ function together to carry magnetic flux present at the end of the gap 116, as a counterpart to the full width of the write core 112. The additional closure elements 36′ and 36″ are also in magnetic communication with the closure elements 34′, but due to the recessed location of their end face 36a, these additional closure strips do not affect or change the effective gap width; i.e., the presence of the additional closure members 36′, 36″ do not cause any significant widening of the track written by the transducer having such a core structure. On the other hand, the additional closures 36′, 36″ do have a very significant effect on the overall magnetic performance, since they lower the effective reluctance of the overall write closure structure, in effect acting in the same manner as resistances added in parallel.

The effect of the write closure structure just described may be further understood and appreciated by reference to the simplified circuit shown in Fig. 3.

As mentioned above, the degree of isolation in the disclosed multi-component core structure is a function of the magnetic reluctance of the write closures (i.e., $R_3$) in relation to the reluctance attributable to the read core structure, including the read core itself and the isolation layers 124 and 126 (as represented by $R_x + R_2$). Accordingly, an effective way of increasing such isolation would be to increase the relative amount of flux passing through both of the identical write closures 118 and 122; however, this is not merely a matter of increasing the relative size of the write closure members since in the first place the read gap and write gap parameters are determined by other considerations. Furthermore, as discussed above, it is desirable to limit the area of overlap between the write closures and the read core, since this in itself increases the degree of effective isolation.

Decreasing the reluctance of the write closure structure in the manner taught with respect to the embodiment just described thus becomes another highly effective but previously unappreciated way of achieving the desired additional isolation of write core structure from read core structure and, as has already been indicated, this is accomplished without significantly changing the effective gap length.

As with the first embodiment described above, core 120 may be on the order of about half the total width of the write core 12 (for example, .127 and .254 mm (5 mils and 10 mils), respectively); the combined thickness of the write closures 188 and 122 (on both sides of the read core 120) will thus be on the order of about .102 mm (4 mils) (allowing approximately .0127mm (.5 mil) for each of the isolation layers 124 and 126). While the particular number of individual write closure strips 34, 36 which make up this total thickness is not a matter of great importance, the general arrangement illustrated (two or three such strips on each side of the read core) is believed generally representative of a good physical implementation.

The outermost (additional, or supplemental) write closure strips 36 and 40 should have an effective thickness which is determined by the extent of reduction desired in the effective total reluctance of the write closures 188 and 122, in order to accomplish the desired reduction of flux coupled from the write closures 118 and 122 to the read core 120 during read operations. One example, consistent with and corresponding to the physical example referred to above, comprises the use of one or two such additional closure strips 36, which, in the present example, are identical to closure strips 40, whose thickness is on the same order as that indicated for the other such closure strips 34, 38. It is to be noted, in this regard, that the extent to which these additional closure strips 36 and 40 are recessed from the face of the head is preferably between about .0762 and .508 mm (3 mils and 20 mils), in a head corresponding generally to the foregoing example, this amount being at least about 30% of the overall gap length and being at least three times the height of the step at the stepped end extremity.

By use of an additional write closure 36 in a relationship comparable to that shown in Fig. 7, and consistent with the foregoing example, read core versus write closure isolation may be reduced significantly, and may achieve isolation magnitudes on the order of at least 95%. This significantly improves the performance of the transducer involved by making it much less sensitive to adjacent track signals and other such noise which otherwise would be picked up by the write closures.

Generally, the same structural materials used to construct write and read cores 12 and 20, write closures 18 and 22, and isolation elements 24 and 26, may be used to construct write and read cores 112 and 120, write closures 118 and 122, and isolation elements 124 and 126, respectively. The various components ("strata") constituting the different core elements may each comprise a "stack" of thin sheet-like laminae, as is often done to reduce eddy current effects, but this is not really essential in transducer cores generally, particularly where (as here) the intended application is to write and read relatively narrow and closely-spaced tracks of magnetic transitions.

## Claims

1. A magnetic core structure (10;110) for a transducer head particularly adapted for use in digital storage devices comprising: magnetic core elements formed from magnetic material and defining a magnetic circuit, said circuit having at least one gap (16;116) where magnetic flux in such circuit may access magnetically-recordable data storage media; means defining a first magnetic pole structure (12;112) for said circuit at one side of said gap, and means defining a second magnetic pole structure (14;114) for said circuit at the other side of said gap, generally opposite said first pole structure; at least one (14;114) of said magnetic pole structures having a laminar structure comprising at least one medial strata (20;120) and at least one flanking strata (18,22;118,122) disposed adjacent to and overlying at least portions of said medial strata to thereby define an included area of overlap (A) at such portions, said medial strata having a thickness at said gap which is less than that of the other pole structure disposed across said gap; non-magnetic isolation means (24,26;124,126) disposed between said medial strata and said flanking strata at said one pole structure, for isolating at least said portions of said medial strata from the adjacent portions of the flanking strata; said flanking strata (18,22;118,122) comprising magnetic material and serving to magnetically shunt portions of said medial strata along said magnetic circuit, said flanking strata extending alongside and into magnetic communication with said medial strata at a point spaced (32;132) from said one pole structure to provide a parallel magnetic return; said medial strata (20;120) having an intermediate portion shunted by and separated from said flanking strata, said intermediate portion defining a core-accessing location along said magnetic path where an electromagnetic coil (28;128) may be applied to the core; said medial strata extending into magnetic communication with said other magnetic pole structure at a point (32;132) beyond said intermediate portion; characterised in that said included area of overlap (A) between said medial strata and said flanking strata is limited in size to an amount which limits the transfer of magnetic flux from the flanking strata to the medial strata through the non-magnetic isolation means at said area to less than about ten percent of the total magnetic flux in said magnetic circuit.

2. A magnetic core structure according to Claim 1 wherein both of said pole structures (12,14; 112,114) at said gap (16;116) have generally the same overall thickness of width measured in a direction along said gap.

3. A magnetic core structure according to Claim 1 or Claim 2 which includes at least a pair of said flanking strata (18,22;118,122), each disposed on an opposite side of said medial strata (20;120) and overlying a selected area thereof limited in size to maintain said percentage of flux transfer.

4. A magnetic core structure according to any of Claims 1 to 3 wherein said isolation means (24,26;124,126) comprises a layer of non-magnetic material and the ratio of thickness of said medial strata (20;120), said flanking strata (18,22;118,122) and said isolation layer at said area of overlap is on the order of about 10:4:1.

5. A magnetic core structure according to any of Claims 1 to 4 wherein said included area of overlap is limited in size by using flanking strata (118,122) comprising: an elongated structure having a stepped end extremity (36a;36a$'$) adjacent said magnetic gap (116), including a portion which is recessed from the corresponding end extremity (120a) of said medial strata (120) and recessed from said gap so as to make substantially no meaningful contribution to the effective length of said gap but to nonetheless reduce the effective magnetic reluctance of the flanking strata structure.

6. A magnetic core structure according to Claim 5 wherein said at least one pole structure having said medial and flanking strata has a thickness rearwardly of said gap which is greater than its thickness along said gap.

7. A magnetic core structure according to Claim 5 or Claim 6 wherein said flanking strata structure comprises a layered structure having at least two layers (34,36,38,40;34$'$,36$'$), one such layer (36,40;36$'$) being longitudinally offset from the other (34,38;34$'$) to provide said stepped end extremity.

8. A magnetic core structure according to any of Claims 5 to 7 wherein said recessed portion is set back from said corresponding end extremity of said medial strata at least .07mm.

9. A magnetic core structure according to any of Claims 5 to 8 wherein said recessed portion is set back from said corresponding end extremity of said medial strata distance corresponding to at least about thirty percent of the overall gap length.

10. A magnetic core structure according to any of Claims 5 to 9 wherein said recessed portion is set back from said corresponding end extremity of said medial strata a distance corresponding to at least about three times the height of the step at said stepped end extremity.

11. A method of reading and writing magnetic flux transitions on magnetically-recordable media by using a single-gap transducer head in a manner producing results analogous to those achieved by a multi-gap head, comprising the steps: transporting the recording media past a single-gap transducer head in a recording pass and recording flux transitions on said medial during said pass by using a first portion (12;112) of the transducer magnetic core structure (10;110) which defines the two opposite sides of said single gap (16;116) said first portion (12;112) constituting a predetermined part of the overall length of said gap (16;116) transporting the recording media past said transducer head in a reproducing pass and, during said reproducing pass, reproducing the flux transitions previously recorded on said media by using a second portion (14;114) of said magnetic core structure (10;110); said second portion (14;114) of said core structure (10;110) constituting magnetic structure forming a predetermined different portion of the overall length of said gap (16;116), whereby a different proportion of the same transducing gap is used during read operations than is used during write operations; and isolating said second portion (14;114) of said magnetic core structure (10;110) from other portions thereof during said reproducing pass by disposing non-magnetic means (24,26;124,126) therebetween and restricting the area of overlap (A) existing between said second portions (14;114) and said other portions to an extent

10

which limits said flux transfer to a value not substantially exceeding ten percent of the total magnetic flux flowing in said magnetic core structure (10;110).

12. A method of reading and writing magnetic flux transitions on magnetically-recordable media according to Claim 11 further comprising the steps of: increasing the degree of isolation of said second portion (114) of said magnetic core structure (110) from said first portions (112) of said core structure (110) during said reproducing pass by disposing magnetic shunt means (124) across at least part of said second portion (114) at said gap (116) and recessing at least some of the end portions (36a) of said magnetic shunt means (124) from said magnetic gap (116).

**Patentansprüche**

1. Magnetkernstruktur (10; 110) für einen Wandlerkopf, die besonders zur Verwendung in digitalen Speichereinrichtungen geeignet ist, umfassend: Magnetkernelemente, die aus magnetischem Material gebildet sind und einen magnetischen Kreis definieren, wobei der Kreis zumindest einen Spalt (16; 116) aufweist, wo der magnetische Fluß in einem solchen Kreis Zugang zu magnetisch beschreibbaren Datenspeichermedien hat; ein Mittel, das eine erste Magnetpolstruktur (12; 112) für den Kreis an einer Seite des Spalts definiert, und ein Mittel, das eine zweite Magnetpolstruktur (14; 114) für den Kreis an der anderen Seite des Spalts, im allgemein gegenüber der ersten Polstruktur, definiert; wobei zumindest eine (14; 114) der Magnetpolstrukturen eine Laminarstruktur aufweist, bestehend aus zumindest einer Mittelschicht (20; 120) und zumindest einer Seitenschicht (18, 22; 118, 122), die angrenzend an die Mittelschicht angeordnet ist und zumindest Teile dieser Mittelschicht überdeckt, wodurch an solchen Teilen ein eingeschlossener Überlappungsbereich (A) definiert wird, wobei die Mittelschicht an dem Spalt eine Dicke aufweist, die geringer als jene der anderen Polstruktur ist, die an der anderen Seite des Spaltes angeordnet ist; ein nichtmagnetisches Isoliermittel (24, 26; 124, 126), das zwischen der Mittelschicht und der Seitenschicht an der einen Polstruktur angeordnet ist, um zumindest besagte Teile der Mittelschicht von den benachbarten Teilen der Seitenschicht zu isolieren; wobei die Seitenschicht (18, 22; 118, 122) magnetisches Material umfaßt und dazu dient, Teile der Mittelschicht entlang dem magnetischen Kreis magnetisch nebenzuschließen, und wobei sich die Seitenschicht entlang der und in magnetische Verbindung mit der Mittelschicht an einem Punkt (32; 132) erstreckt, der mit Abstand zu der einen Polstruktur angeordnet ist, um eine parallele magnetische Rückleitung zu erhalten; wobei die Mittelschicht (20; 120) einen Zwischenteil aufweist, der durch die Seitenschicht nebengeschlossen wird und von dieser getrennt ist, wobei der Zwischenteil eine Kernzugangsstelle entlang dem magnetischen Weg definiert, wo eine elektromagnetische Spule (28; 128) an den Kern angelegt werden kann; wobei sich die Mittelschicht an einem Punkt (32; 132) über dem Zwischenteil in magnetische Verbindung mit der anderen Magnetpolstruktur erstreckt; dadurch gekennzeichnet, daß der eingeschlossene Überlappungsbereich (A) zwischen der Mittelschicht und der Seitenschicht in der Größe auf ein Ausmaß begrenzt ist, das die Übertragung des magnetischen Flusses von der Seitenschicht zu der Mittelschicht durch das nichtmagnetische Isoliermittel in diesem Bereich auf weniger als etwa zehn Prozent des gesamten magnetischen Flusses in dem magnetischen Kreis begrenzt.

2. Magnetkernstruktur nach Anspruch 1, wobei beide Polstrukturen (12, 14; 112, 114) an dem Spalt (16; 116) im allgemeinen dieselbe Gesamtdicke in der Breite haben, gemessen in einer Richtung entlang dem Spalt.

3. Magnetkernstruktur nach Anspruch 1 oder Anspruch 2, die zumindest ein Paar der Seitenschichten (18, 22; 118, 122) enthält, die jeweils an gegenüberliegenden Seiten der Mittelschicht (20; 120) angeordnet sind und einen bestimmten Bereich davon überlagern, der in der Größe begrenzt ist, um den Prozentsatz der Flußübertragung aufrechtzuerhalten.

4. Magnetkernstruktur nach einem der Ansprüche 1 bis 3, wobei das Isoliermittel (24, 26; 124, 126) eine Schicht aus nichtmagnetischem Material umfaßt und das Verhältnis der Dicke der Mittelschicht (20; 120), der Seitenschicht (18, 22; 118, 122) und der Isolierschicht in dem Überlappungsbereich in der Größenordnung von etwa 10:4:1 liegt.

5. Magnetkernstruktur nach einem der Ansprüche 1 bis 4, wobei der eingeschlossene Überlappungsbereich in der Größe durch Verwendung einer Seitenschicht (118, 122) begrenzt wird, umfassend: eine längliche Struktur mit abgestuftem Ende (36a; 36a') angrenzend an den magnetischen Spalt (116), die einen Teil enthält, der zu dem entsprechenden Ende (120a) der Mittelschicht (120) vertieft und zu dem Spalt vertieft ist, so daß er im wesentlichen keinen bedeutenden Beitrag zu der effektiven Länge des Spalts liefert, aber nichtsdestoweniger den effektiven magnetischen Widerstand der Seitenschichtstruktur verringert.

6. Magnetkernstruktur nach Anspruch 5, wobei die zumindest eine Polstruktur mit der Mittel und Seitenschicht eine Dicke rückwärtig des Spaltes aufweist, die größer als ihre Dicke entlang dem Spalt ist.

7. Magnetkernstruktur nach Anspruch 5 oder Anspruch 6, wobei die Seitenschichtstruktur eine Schichtstruktur aufweist mit zumindest zwei Schichten (34, 36, 38, 40; 34', 36'), wobei eine solche Schicht (36, 40; 36') in Längsrichtung zu der anderen (34, 38; 34') zur Bildung des abgestuften Endes versetzt ist.

8. Magnetkernstruktur nach einem der Ansprüche 5 bis 7, wobei der vertiefte Teil von dem entsprechenden Ende der Mittelschicht um zumindest 0,07 mm zurückgesetzt ist.

9. Magnetkernstruktur nach einem der Ansprüche 5 bis 8, wobei der vertiefte Teil von dem entsprechenden Ende der Mittelschicht um eine Strecke zurückgesetzt ist, die zumindest etwa dreißig Prozent der gesamten Spaltlänge entspricht.

10. Magnetkernstruktur nach einem der Ansprüche 5 bis 9, wobei der vertiefte Teil von dem entsprechenden Ende der Mittelschicht um eine Strecke zurückgesetzt ist, die zumindest etwa dem Dreifachen der Höhe der Stufe an dem abgestuften Ende entspricht.

11. Verfahren zum Lesen und Einschreiben von magnetischen Flußübergängen in magnetisch beschreibbare Medien unter Verwendung eines Einspalt-Wandlerkopfes in einer Weise, die analoge Ergebnisse zu jenen liefert, die durch einen Mehrspalt-Kopf erzielt werden, bestehend aus den folgenden Schritten: Befördern der Aufzeichnungsmedien über einen Einspalt-Wandlerkopf in einem Aufzeichnungslauf und Aufzeichnen der Flußübergänge auf die Medien während des Laufs unter Verwendung eines ersten Teils (12; 112) der Wandler-Magnetkernstruktur (10; 110), der die beiden gegenüberliegenden Seiten des einfachen Spalts (16; 116) definiert, wobei der erste Teil (12; 112) einen bestimmten Teil der Gesamtlänge des Spalts (16; 116) bildet, Befördern der Aufzeichnungsmedien über den Wandlerkopf in einem Wiedergabelauf und, während dieses Wiedergabelaufs, Wiedergabe der zuvor auf den Medien aufgezeichneten Flußübergänge unter Verwendung eines zweiten Teils (14; 114) der Magnetkernstruktur (10; 110); wobei der zweite Teil (14; 114) der Kernstruktur (10; 110) eine Magnetstruktur bildet, die einen vorbestimmten unterschiedlichen Teil der Gesamtlänge des Spalts (16; 116) bildet, wobei während der Leseoperationen ein anderer Anteil desselben Wandlerspalts als während der Schreiboperationen verwendet wird; und Isolieren des zweiten Teils (14; 114) der Magnetkernstruktur (10; 110) von anderen Teilen davon während des Wiedergabelaufs durch Anordnen nichtmagnetischer Mittel (24, 26; 124, 126) dazwischen und Begrenzen des Überlappungsbereichs (A), der zwischen den zweiten Teilen (14; 114) und den anderen Teilen liegt, in einem Ausmaß, das den Flußübergang auf einen Wert begrenzt, der im wesentlichen zehn Prozent des gesamten magnetischen Flusses nicht übersteigt, der in der Magnetkernstruktur (10; 110) fließt.

12. Verfahren zum Lesen und Einschreiben von magnetischen Flußübergängen in magnetisch beschreibbare Medien nach Anspruch 11, welches ferner die folgenden Schritte umfaßt: Erhöhen des Isolierungsmaßes des zweiten Teils (114) der Magnetkernstruktur (110) von den ersten Teilen (112) der Kernstruktur (110) während des Wiedergabelaufs, indem ein magnetisches Nebenschlußmittel (124) über zumindest einen Teil des zweiten Teils (114) an dem Spalt (116) angeordnet wird, und Vertiefen von zumindest einigen der Endteile (36a) des magnetischen Nebenschlußmittels (124) zu dem magnetischen Spalt (116).

## Revendications

1. Structure de noyau magnétique (10; 110) pour une tête formant transducteur destinée en particulier à être utilisée dans des dispositifs de stockage numérique comprenant : des éléments de noyau magnétique faits d'une matière magnétique et définissant un circuit magnétique, ce circuit comportant au moins un entrefer (16; 116) à l'endroit où le flux magnétique dans ce circuit peut accéder à des supports de stockage de données pouvant être enregistrées magnétiquement; des moyens définissant une première structure de pôle magnétique (12; 112) pour le circuit d'un côté de l'entrefer, et des moyens définissant une seconde structure de pôle magnétique (14; 114) pour le circuit de l'autre côté de l'entrefer, généralement opposée à la première structure de pôle; au moins une des structures de pôles magnétiques, la structure (14; 114) étant une structure laminaire constituée d'au moins une lame médiane (20; 120) et d'au moins une lame de flanquement (18, 22; 118, 122) disposée à proximité d'au moins des parties de la lame médiane et la recouvrant afin de définir ainsi une aire de chevauchement incluse (A) au niveau des ces parties, la lame médiane ayant une épaisseur au niveau de l'entrefer qui est inférieure a celle de l'autre structure de pôle disposée de l'autre côté de l'entrefer; un moyen d'isolement non magnétique (24, 26; 124, 126) disposé entre la lame médiane et la lame de flanquement au niveau de la première structure de pôle, pour isoler au moins lesdites parties de la lame médiane des parties adjacentes de la lame de flanquement; la lame de flanquement (18, 22; 118, 122) comprenant de la matière magnétique et servant à shunter magnétiquement des parties de la lame médiane le long du circuit magnétique, la lame de flanquement s'étendant le long de la lame médiane et en communication magnétique avec celle-ci en un point espacé (32; 132) de la première structure de pôle afin de fournir un retour magnétique parallèle; la lame médiane (20; 120) comportant une partie intermédiaire shuntée par les lames de flanquement et séparée de celles-ci, la partie intermédiaire définissant un emplacement d'accès de noyau le long du trajet magnétique à l'endroit où une bobine électromagnétique (28; 128) peut être appliquée au noyau; la lame médiane s'étendant en communication magnétique avec l'autre structure de pôle magnétique on un point (32; 132) situé au-delà de la partie intermédiaire, caractérisée en ce que l'aire incluse de chevauchement (A) entre la lame médiane et les lames de flanquement est limitée en dimension à une valeur qui limite le transfert de flux magnétique des lames de flanquement à la lame médiane à travers les moyens d'isolement non magnétiques au niveau de ladite aire à moins d'environ 10% du flux magnétique total dans le circuit magnétique.

2. Structure de noyau magnétique suivant la revendication 1, dans laquelle les deux structures de pôle (12, 14; 112, 114) au niveau de l'entrefer (16; 116) ont généralement la même épaisseur ou largeur globale mesurée dans un sens le long de l'entrefer.

3. Structure de noyau magnétique suivant la revendication 1 ou 2, qui comprend au moins deux lames de flanquement (18, 22; 118, 122) disposées respectivement sur les côtés opposés de la lame médiane (20; 120) et recouvrant une aire sélectionnée de celle-ci limitée en dimension pour maintenir ledit pourcentage de transfert de flux.

4. Structure de noyau magnétique suivant l'une quelconque des revendications 1 à 3, dans laquelle le moyen d'isolement (24, 26; 124, 126) comprend une lame de matière non magnétique et le rapport d'épaisseur de la lame médiane (20; 120), des lames de flanquement (18, 22; 118, 122) et de la lame d'isolement au niveau de ladite aire de chevauchement est de l'ordre d'environ 10:4:1.

5. Structure de noyau magnétique suivant l'une quelconque des revendications 1 à 4, dans laquelle l'aire incluse de chevauchement est limitée en dimension par l'utilisation de lames de flanquement (118, 122) comprenant : une longue structure présentant une extrémité à gradin (36a; 36a') adjacente à l'entrefer magnétique (116) comprenant une partie qui est en retrait par rapport à l'extrémité correspondante (120a) de la lame médiane (120) et qui est en retrait par rapport à l'entrefer de manière à n'apporter en substance aucune contribution sensible à la longueur effective de l'entrefer mais à néanmoins réduire la réluctance magnétique efficace de la structure des lames de flanquement.

6. Structure de noyau magnétique suivant la revendication 5, dans laquelle ladite au moins une structure de pôle comportant la lame médiane et les lames de flanquement a une épaisseur en arrière de l'entrefer qui est supérieure à son épaisseur le long de l'entrefer.

7. Structure de noyau magnétique suivant la revendication 5 ou 6, dans laquelle la structure des lames de flanquement comprend une structure en lames comportant au moins deux lames (34, 36, 38, 40; 34', 36'), l'une de ces lames (36, 40; 36') étant décalée longitudinalement de l'autre (34, 38; 34') afin de former l'extrémité à gradin.

8. Structure de noyau magnétique suivant l'une quelconque des revendications 5 à 7, dans laquelle la partie en retrait est décalée vers l'arrière par rapport à l'extrémité correspondante de la lame médiane d'au moins 0,07 mm.

9. Structure de noyau magnétique suivant l'une quelconque des revendications 5 à 8, dans laquelle la partie en retrait est décalée vers l'arrière de l'extrémité correspondante de la lame médiane d'une distance correspondant au moins à environ 30% de la longueur totale de l'entrefer.

10. Structure de noyau magnétique suivant l'une quelconque des revendications 5 à 9, dans laquelle la partie en retrait est décalée vers l'arrière de l'extrémité correspondante de la lame médiane d'une distance correspondant au moins au triple environ de la hauteur du gradin à l'extrémité à gradin.

11. Procédé de lecture et d'enregistrement de transitions de flux magnétique sur un support pouvant être enregistré magnétiquement au moyen d'une tête formant transducteur à un seul entrefer d'une manière produisant des résultats analogues à ceux obtenus par une tête à plusieurs entrefers, comprenant les étapes consistant à : transporter le support d'enregistrement en regard d'une tête formant transducteur à un seul entrefer au cours d'un défilement d'enregistrement et enregistrer les transitions de flux sur le support d'enregistrement pendant le défilement en utilisant une première partie (12; 112) de la structure de noyau magnétique de transducteur (10; 110) qui définit les deux côtés opposés de l'entrefer unique (16; 116), la première partie (12; 112) constituant une partie prédéterminée de la longueur totale de l'entrefer (16; 116), transporter le support d'enregistrement en regard de la tête formant transducteur au cours d'un défilement de reproduction et, pendant ce défilement de reproduction, reproduire les transitions de flux précédemment enregistrées sur le support au moyen d'une seconde partie (14; 114) de la structure de noyau magnétique (10; 110), la seconde partie (14; 114) de la structure de noyau (10; 110) constituant une structure magnétique formant une partie différente prédéterminée de la longueur totale de l'entrefer (16; 116), de sorte qu'une proportion différente du même entrefer de transduction est utilisée pendant les opérations de lecture et pendant les opérations d'enregistrement, et isoler la seconde partie (14; 114) de la structure de noyau magnétique (10; 110) d'autres parties de celle-ci pendant le défilement de reproduction, en disposant des moyens non magnétiques (24, 26; 124, 126) entre elles et en limitant l'aire de chevauchement (A) existant entre les secondes parties (14; 114) et les autres parties, dans une mesure telle que le transfert de flux soit limité à une valeur ne dépassant en substance sensiblement pas 10% du flux magnétique total s'écoulant dans la structure de noyau magnétique (10; 110).

12. Procédé pour la lecture et l'enregistrement de transitions de flux magnétique sur des supports pouvant être enregistrés magnétiquement suivant la revendication 11, comprenant, en outre, les étapes consistant à : augmenter le degré d'isolement de la seconde partie (114) de la structure de noyau magnétique (110) par rapport aux premières parties (112) de la structure de noyau (110) pendant le défilement de reproduction, en disposant des moyens de shuntage magnétique (124) sur au moins une partie de la seconde partie (114) au niveau de l'entrefer (116) et en décalant en retrait au moins certaines des parties d'extrémité (36a) des moyens de shuntage magnétique (124) par rapport à l'entrefer magnétique (116).

14

**Fig. 1.**

**Fig. 2.**

**Fig. 3.**

Fig. 4.

Fig. 5.

Fig. 6

Fig. 7

16